# EUROPÄISCHE PATENTANMELDUNG

(11) **EP 0 626 298 A1**
(43) Veröffentlichungstag der Anmeldung: **30.11.1994**
(21) Anmeldenummer: 94106191.3
(22) Anmeldetag: 21.04.1994
(51) Int. Cl.: B61D 5/06, B61D 5/02, B60P 7/13

(54) **Tankwagen-Logistik-System**

(30) Priorität: 27.05.1993 DE 4317574
(71) Anmelder: Linke-Hofmann-Busch GmbH, D-38239 Salzgitter (DE)
(72) Erfinder: Beier, Günter, Dipl.-Ing., D-38259 Salzgitter (DE)

(57) **Zusammenfassung**

Die Erfindung betrifft ein Tankwagen-Logistik-System, aufweisend ein Tankwagenuntergestell (1) und einen darauf lösbar befestibaren, großvolumigen Tanks (2) oder zwei darauf lösbar befestigbare, kleinvolumige Tanks (2a,2b).

Der Erfindung liegt die Aufgabe zugrunde, ein Tankwagen-Konzept zu schaffen, daß den Forderungen nach größerer Flexibilität und größerer Ausnutzung der Trägerfahrzeuge sowie der Tanks gerecht wird.

Die Aufgabe wir dadurch gelöst, daß ein Tankwagen-Logstik-System geschaffen wird, das ein Tankwagenuntergestell (1) und einen darauf lösbar befestigbaren, großvolumigen Tank (2) oder zwei darauf lösbar befestigbare, kleinvolumige Tanks (2a,2b) mit in Längsrichtung wirksamen Anschlagkonsolen (4,4a,4b) am Tankwagenuntergestell (1) und Tankanschlagkonsolen (3,3a,3b) am Tank (2,2a,2b) aufweist, wobei die Anschlagkonsolen (4,4a,4b) des Tankwagenuntergestells (1) derart ausgebildet und angeordnet sind, daß diese gleichermaßen als Anschläge für die Tankanschlagkonsolen (3) des großvolumigen Tanks (2) als auch als Anschläge für die Tankanschlagkonsolen (3a,3b) der zwei, je einer Hälfte des Tankwagenuntergestells (1) zugeordneten, kleinvolumigen Tanks (2a,2b) geeignet sind.

## Beschreibung

Die Erfindung betrifft ein Tankwagen-Logistik-System, aufweisend ein Tankwagenuntergetell und wahlweise einen darauf lösbar befestigbaren großvolumigen Tank oder zwei darauf lösbar befestigtbare, kleinvolumige Tanks.

Marktgegebenheiten und betriebswirtchafltiche Überlegungen auf der Betreiberseite von Tankwagen und insbesondere von schienengebundenen Tankwagen (Kesselwagen) erfordern eine größere Flexibilität des Tansportmittels Kesselwagen.

Dem konventionellen Tank- oder Kesselwagen sind hier artbedingte Grenzen besetzt.

Das reine Handling betreffend, wird die Forderung nach größerer Flexibilität zwar auch von Tankcontainern erfüllt, die auf Container-Tragwagen transportierbar sind; durch die vorgegebenen, internationalen Abmessungen wird das Trägerfahrzeug aber nicht optimal genutzt. Außerdem sind insbesondere bei derartigen Eisenbahnfahrzeugen die kürzeren Revisionsfristen und die kalkulatorisch kürzere Lebensdauer gegenüber Kesselwagen nachteilig.

Der Erfindung liegt daher die Aufgabe zugrunde, ein Tankwagen-Konzept zu schaffen, daß den Forderungen nach größerer Flexibilität und größerer Ausnutzung des Trägerfahrzeuges sowie des Tanks gerecht wird.

Erfindungsgemäß wird diese Aufgabe durch das in Anspruch 1, gekennzeichnete Tankwagen-Logistik-System gelöst.

Vorteilhafte Weiterbildungen sind in den Unteransprüchen 2 bis 14 gekennzeichnet.

Die Erfindung wird nachfolgend anhand einiger in der Zeichnung dargestellter Ausführungsbeispiele aus dem Schienenfahrzeugbereich näher erläutert.

Die Zeichnung zeigt dazu in
- Fig. 1: eine Seitenansicht eines Tankwagenuntergestelles mit aufgesatteltem, großvolumigem Tank (70 m³);
- Fig. 2: eine Seitenansicht eines Tankwagenuntergestelles mit zwei aufgesattelten kleinvolumigen Tanks (je 34 m³);

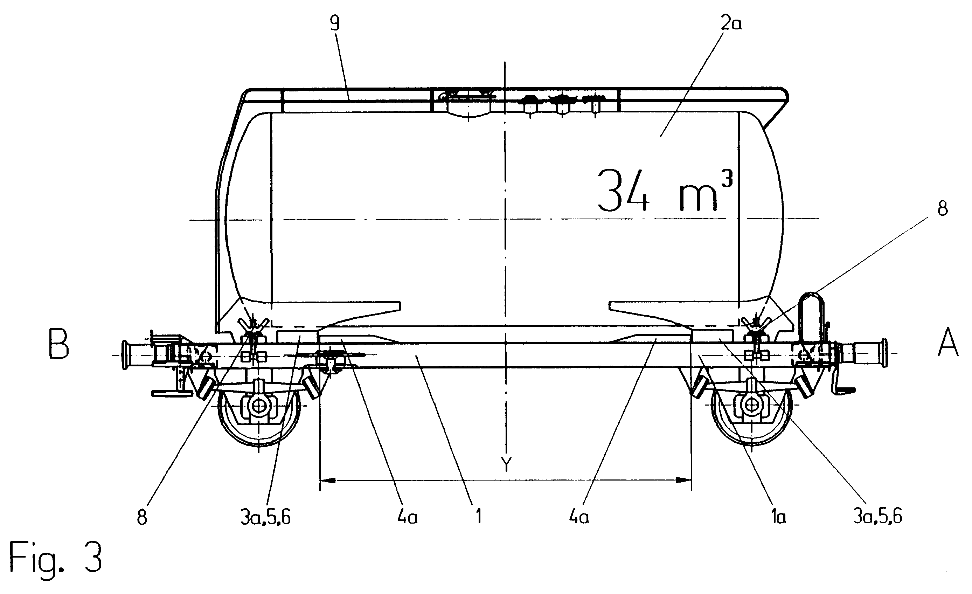

- Fig. 3: eine Seitenansicht eines kurz bauenden Tankwagenuntergestelles mit einem aufgesattelten, kleinvolumigen Tank;
- Fig. 4: eine Seitenansicht eines Tankwagenuntergestelles mit einem aufgesattelten, großvolumigen Tank einer zweiten Bauart (50 m³);
- Fig. 5: eine Seitenansicht eines Tankwagenuntergestelles mit zwei aufgesattelten, kleinvolumigen Tanks unterschiedlicher Bauart (34 m³ und 28 m³);
- Fig. 6: in Seitenansicht ein zweites Beispiel für die Aufsattelung eines großvolumigen Tanks auf ein Tankwagenuntergestell;
- Fig. 7: in Seitenansicht ein zweites Beispiel für die Aufsattelung zweier kleinvolumigen Tanks auf ein Tankwagenuntergestell.

Dem Tankwagen-Logistik-System (TLS) liegt der Grundgedanke zugrunde, eine konsequente Trennung von Tankwagenuntergestell 1 und Tank 2 konstruktiv zu verwirklichen, wobei die Möglichkeit der Aufnahme bzw. des zügigen Umschlages eines großvolumigen Tanks mit einem Fassungsvermögen von ca. 50 bis 70 m³ oder der Aufnahme bzw. des zügigen Umschlages von zwei kleinvolumigen Tanks 2a, 2b bis ca. 34 m³ gegeben ist.

Das TLS weist ein 4achsiges, langes Standarduntergestell (Tankwagenuntergestell 1) und einen darauf lösbar befestigbaren, einzelnen, großvolumigen Tank 2 oder zwei darauf lösbar festigbare, kleinvolumige Tanks 2a, 2b auf.

Außerdem kann dem TLS ein 2achsiges, kurzes Standarduntergestell (Tankwagenuntergestell 1a) zum Transport eines einzelnen, kleinvolumigen Tanks 2a, 2b zugeordnet sein.

An der Unterseite der Tanks 2, 2a, 2b sind in Längsrichtung wirksame Tankanschlagkonsolen 3, 3a, 3b und am Tankwagenuntergestell 1, 1a sind ebenfalls in Längsrichtung wirksame Anschlagkonsolen 4, 4a, 4b befestigt, die mit den jeweils zugeordneten Tankanschlagkonsolen 3, 3a, 3b ein Wirkpaar bilden.

Die Anlagekonsolen 4, 4a, 4b des Tankwagenuntergestells 1 sind derart ausgebildet und angeordnet, daß diese gleichermaßen als Anschläge für die Tankanschlagkonsolen 3 des einzigen, großvolumigen Tanks 2 als auch als Anschläge für die Tankanschlagkonsolen 3a, 3b der zwei kleinvolumigen Tanks 2a, 2b geeignet sind. Der kleinvolumige Tank 2a ist dabei einer Hälfte bezüglich der Quermittelebene des Tankwagenuntergestelles 1, der kleinvolumige Tank 2b der anderen Hälfte des Tankwagenuntergestelles 1 zugeordnet.

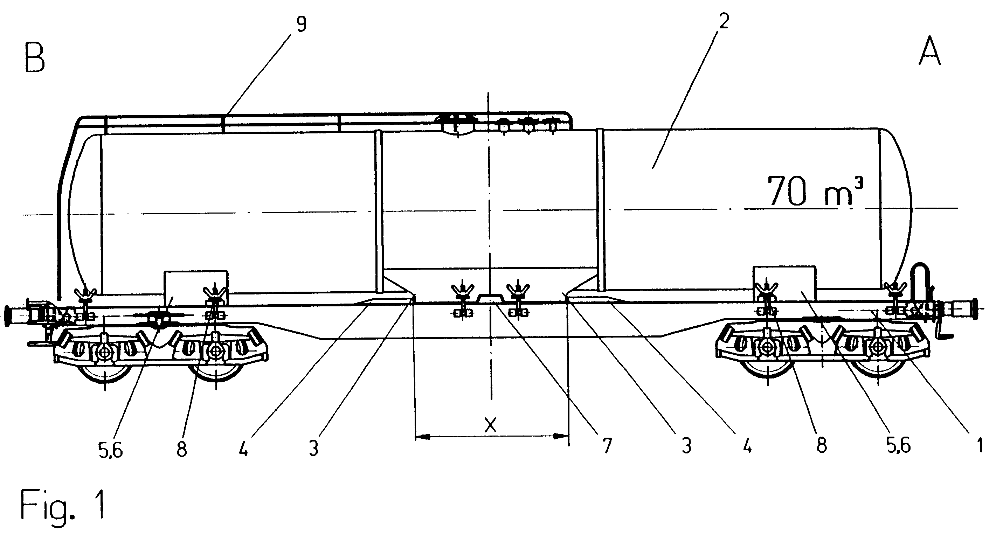

In einem ersten Lösungsbeispiel (Fig. 1) ist der Tank 2 über eine Mittensattelung für die Längskräfte im Bereich der Quermitte mit dem Tankwagenuntergestell 1 lösbar befestigt. Die Längskräfte aus dem Betrieb (z. B. bei einem Pufferstoß) werden entkoppelt von den Vertikalkräften (z. B. aus dem Eigengewicht) in das Tankwagenuntergestell 1 geleitet.

Jeder Tank 2, 2a, 2b weist mindestens einen, vorzugsweise an jedem Ende einen Tankstuhl 5 auf, über den der Tank 2, 2a, 2b auf einem ebenen Boden abstell- und abstützbar ist. Ebenso werden die Vertikalkräfte über die Kesselstühle 5 in das Untergetell 1 bzw. 1a geleitet.

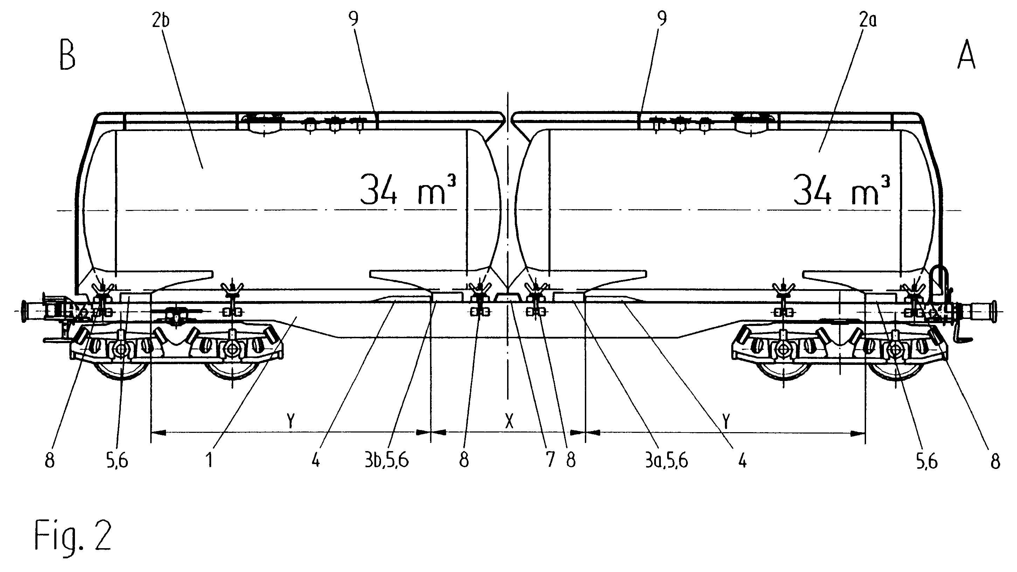

Die Anschlagkonsolen 4 des Tankwagenuntergestells 1 sind beidseitig zur und im Bereich der Quermittelebene des Tankwagenuntergestelles 1 in einem vorgegebenen Rastermaß X auf Abstand angeordnet. Die Tankanschlagkonsolen 3 des großvolumigen Tanks 2 (vgl. Fig. 1) oder die im Bereich der Quermittelebene einander zugewandten Tankanschlagkonsolen 3a, 3b der beiden kleinvolumigen Tanks 2a, 2b (vgl. Fig. 2) sind zwischen die Anschlagkonsolen 4 des Tankwagenuntergestelles 1 eingesetzt. Bei einer Krafteinleitung an einem Ende, z. B. Ende A, des Tankwagenuntergestelles 1 wird lediglich die bezüglich der Quermittelebene des Tankwagenuntergestelles 1 auf der Seite (Ende A) der Krafteinleitung angeordnete Anschlagkonsole 4 durch die Reaktionskraft aus den Tanks 2, 2a, 2b beaufschlagt.

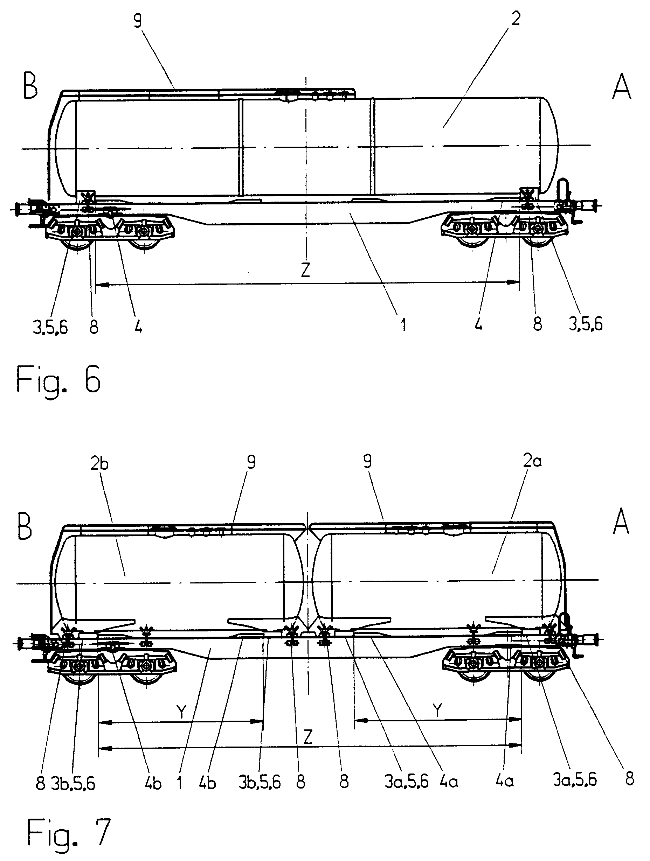

In einem zweiten Lösungsbeispiel (Fig. 6) ist der Tank 2 über eine Endsattelung für die Längskräfte im Bereich der Enden des Untergestelles 1 über Anschlagkonsolen 4 lösbar befestigt. Die Abstützung von zwei kleinvolumigen Tanks 2a, 2b (vgl. Fig. 7) erfolgt jeweils separat für jeden Tank 2a, 2b mittels zweier paarweise angeordneten Anschlagkonsolen 4a (für Tank 2c) und 4b (für Tank 2b), wobei die außenliegenden Anschlagkonsolen 4a, 4b jeweils gleichermaßen als Anschlagkonsolen 4 für einen großvolumigen Tank 2 dienen.

Die Anschlagkonsolen 4, 4a, 4b sind am Tankwagenuntergestell 1 paarweise in einem vorgegebenen Rastermaß Y, Z auf Abstand angeordnet, wobei die Anschlagkonsolen 4, 4a, 4b durch die zugeordneten Tankanschlagkonsolen 3 des einzelnen, großvolumigen Tanks 2 oder die Tankanschlagkonsolen 3a, 3b, der beiden kleinvolumigen Tanks 2a, 2b von außen übergreifbar und einfaßbar sind. Nach einer Krafteinleitung an einem Ende A des Tankwagenuntergestelles 1 werden lediglich die auf dem der Krafteinleitung gegenüberliegenden Ende der Tanks 2, 2a, 2b angeordnete Tankkonsolen 3, 3a, 3b jedes Tanks 2, 2a, 2b beaufschlagt.

Zum Transport oder zur Lagerung eines kleinvolumigen Tanks 2a, 2b ist ein entsprechend kurz bauendes, 2achsiges Tankwagenuntergestell 1a mit zwei im Abstand des Rastermaßes Y für die kleinvolumigen Tanks 2a, 2b angeordneten, untergestellseitigen Anschlagkonsolen 4a, 4b vorgesehen. Dabei entspricht das Rastermaß Y dem Abstand in Längsrichtung der Tanks 2a, 2b zwischen den jeweils am Ende der Tanks 2a, 2b angeordneten Tankanschlagkonsolen 3a, 3b. Die Tankanschlagkonsolen 3a, 3b übergreifen dabei die untergestellseitigen Anschlagkonsolen 4a, 4b von außen und fassen diese ein.

Bei allen Lösungsbeispielen ist es zweckmäßig zwischen den untergestellseitigen Anschlagkonsolen 4, 4a, 4b und den zugeordneten Tankanschlagkonsolen 3, 3a, 3b ein Längsspiel vorzusehen. Das Längsspiel beträgt etwa 0,5 - 2 cm und gewährleistet, daß fertigungsbedingte Maßabweichungen nicht zu einem Verklemmen der Tankanschlagkonsolen 3, 3a, 3b und der Anschlagkonsolen 4, 4a, 4b beim Aufsetzen der Tanks 2, 2a, 2b auf die Untergestelle 1, 1a fuhren. Außerdem werden durch diese Maßnahme nachteilige oder unzulässige Verspannungen der Konstruktion hervorgerufen z. B. durch technische oder mechanische Belastungen aus dem Ladegut, vermieden.

Die Tankstühle 5 der Tanks 2, 2a, 2b überragen in der Aufstandsebene in Querrichtung der Tanks 2, 2a, 2b die Tankanschlagkonsolen 3, 3a, 3b, so daß ein einwandfreies Absetzen mit definierten Aufsetzpunkten auf einen ebenen Boden gewährleistet ist.

Weiterhin weisen die Tanks 2, 2a, 2b an ihren Enden Anhebekonsolen 6 auf, mit denen die Tanks verlastbar sind.

Die Tankstühle 5, die Tankanschlagkonsole 3, 3a, 3b und/oder die Anhebekonsole 6 können baulich kombiniert ausgebildet sein.

Außerdem können am Tankwagenuntergestell 1 und an den Tanks 2, 2a, 2b Zentriereinrichtungen 7 angeordnet sein, die ein zügiges , lagegenaues Positionieren beim Aufladen der Tanks 2, 2a, 2b begünstigen.

Eine einfache zweckmäßige Zentriereinrichtung 7 kann durch mindestens eine untergestellseitige und eine tankseitige Anlaufschräge gebildet werden.

Die Tanks 2, 2a, 2b werden durch Halteeinrichtungen (z. B. Spannbänder, Spannungsschrauben) gegen Querkräfte, hervorgerufen z. B. durch die statische Gewichtslast oder die quer zur Wagenlängsrichtung auftretenden Kräfte aus dem Fahrbetrieb, am Untergestell 1, 1a lösbar befestigt.

Die Tanks 2, 2a, 2b sind auf ihrem Scheitel mit einer Arbeitsbühne 9 versehen.

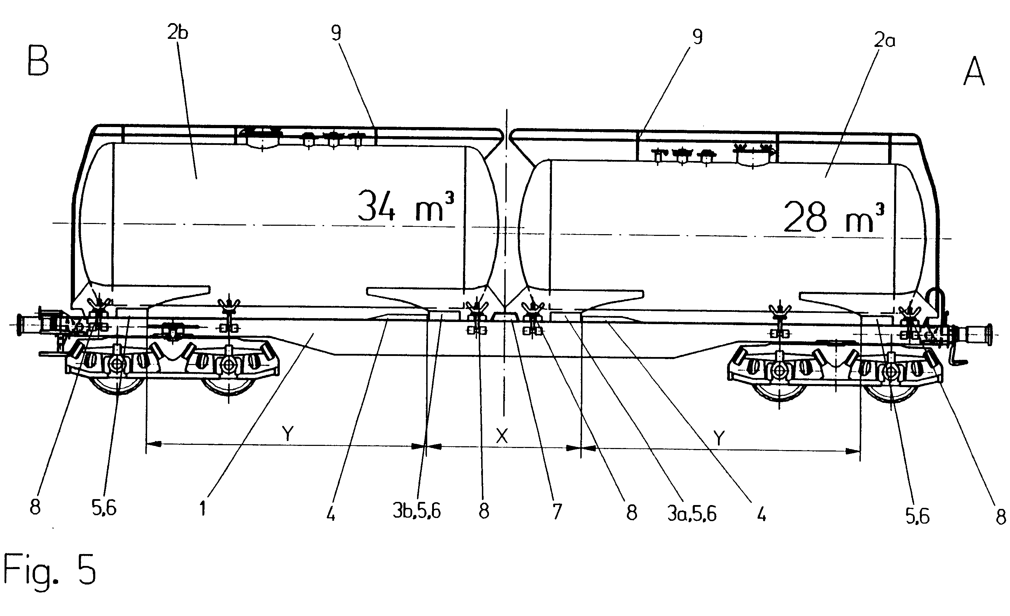

Die Arbeitsbühnen 9 der kleinen Tanks 2a, 2b sind höhengleich ausgebildet und an dem zur Quermitte des Untergestelles 1 weisenden Ende des Tanks 2a, 2b nahezu bis zur Quermitte herangeführt. Die Beachtung der Höhengleichheit ist insbesondere dann nicht selbstverständlich, wenn, wie in Fig. 5 dargestellt, zwei unterschiedlich volumige, kleinvolumige Tanks 2a, 2b, verwendet werden, die neben dem unterschiedlichen Volumen (z. B. 34 m³ und 28 m³) auch eine unterschiedliche Scheitelhöhe aufweisen.

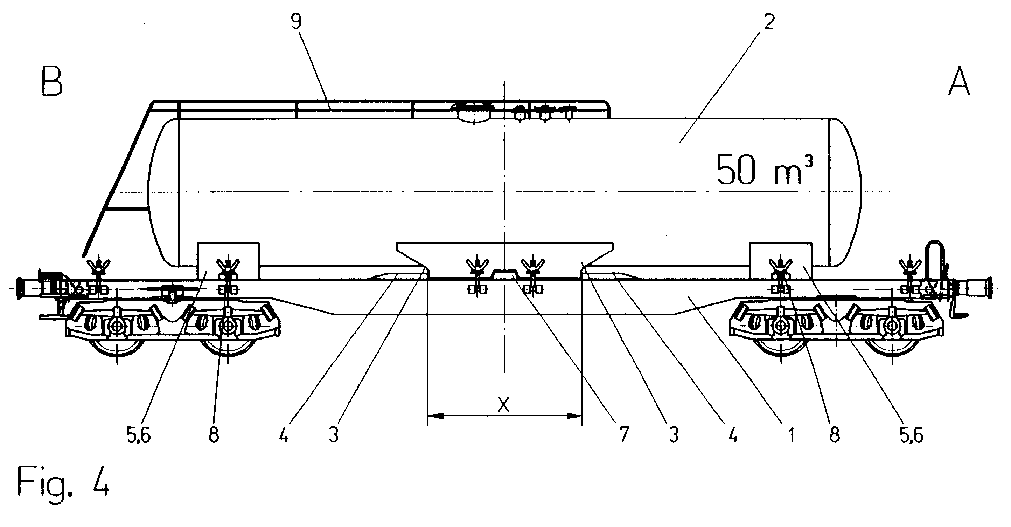

In Fig. 4 ist ein Tank 2 mit gegenüber dem in Fig. 1 dargestellten Tank 2 geringem Ladevolumen (50 m³ gegenüber 70 m³) dargestellt. Dabei ist zu beachten, daß die Tankanschlagkonsolen 3 für alle Typen großvolumiger Tanks 2 gleich ausgebildet sind. Dies gilt ebenso für die Tankanschlagkonsolen 3a, 3b aller Typen kleinvolumiger Tanks 2a, 2b. Ein Beispiel mit unterschiedlich volumigen, kleinen Tanks 2a, 2b ist in Fig. 5 dargestellt.

Durch den Grundgedanken des TLS, nämlich eine konsequente Trennung von Tank und Tankwagenuntergestell vorzunehmen, können Tanks unterschiedlicher Größe und Ausführung (isoliert/unisoliert) einer Standardbauart von Tankwagenuntergestell zugeordnet werden. Ebenso eröffnet sich die Möglichkeit durch Teilung des Ladegutbehälters (Tanks) zwei kleinvolumige Tanks, auch unterschiedlichen Volumens, auf einen Tankwagenuntergestell in Standardbauart zu transportieren. Durch standardisierte Aufnahmepunkte für die Tanks ist es ebenfalls ohne Umbauaufwand möglich, kleinvolumige Tanks wahlweise auf einem 4achsigen Tankwagenuntergestell mit einer Ladekapazität von zwei Tanks oder auf einem 2achsigen Tankwagenuntergestell kurzer Bauart mit einer Ladekapazität von einem kleinvolumigen Tank zu transportieren.

Weiter ergibt sich durch die Verwendung des TLS eine verbesserte Logistik durch
- Beschaffung von Tanks und Tankwagenuntergestellen in unterschiedlicher Stückzahl,
- Nutzung der Tanks als Standbehälter,
- kostengünstige Bevorratung von Tanks für Produktionsspitzen,
- kostengünstige Reparatur oder Revision (technische Überwachungsarbeiten in bestimmten Zeitintervallen), da Tanks und Tankwagenuntergestell getrennt repariert oder überprüft werden können,
- Verwendung von Standarduntergestellen.

## Patentansprüche

1. Tankwagen-Logistik-System, aufweisend ein Tankwagenuntergestell (1) und einen darauf lösbar befestigbaren, großvolumigen Tank (2) oder zwei darauf lösbar befestigbare, kleinvolumige Tanks (2a, 2b) mit in Längsrichtung wirksamen Aschlagkonsolen (4, 4a, 4b) am Tankwagenuntergestell (1) und Tankanschlagkonsolen (3, 3a, 3b) am Tank (2, 2a, 2b), wobei die Anschlagkonsolen (4, 4a, 4b) des Tankwagenuntergestells (1) derart ausgebildet und angeordnet sind, daß diese gleichermaßen als Anschläge für die Tankanschlagkonsolen (3) des großvolumigen Tanks (2) als auch als Anschläge für die Tankanschlagkonsolen (3a, 3b) der zwei, je einer Hälfte des Tankwagenuntergestells (1) zugeordneten, kleinvolumigen Tanks (2a, 2b) geeignet sind.

2. Tankwagen-Logistik-System nach Anspruch 1, **dadurch gekennzeichnet**, daß die Anschlagkonsolen (4) des Tankwagenuntergestells (1) beidseitig zur und im Bereich der Quermittelebene des Tankwagenuntergestells (1) in einem vorgegebenen Rastermaß (X) auf Abstand angeordnet sind, und die Tankanschlagkonsolen (3) des einzigen, großvolumigen Tanks (2) oder die im Bereich der Quermittelebene einander zugewandten Tankanschlagkonsolen (3a, 3b) der beiden kleinvolumigen Tanks (2a, 2b) zwischen die Anschlagkonsolen (4) des Tankwagenuntergestells (1) einsetzbar sind, wobei nach einer Krafteinleitung an einem Ende (A) des Tankwagenuntergestells (1) lediglich die auf der Seite der Krafteinleitung angeordnete Anschlagkonsole (4) des Tankwagenuntergestells (1) beaufschlagt wird.

3. Tankwagen-Logistik-System nach Anspruch 1, **dadurch gekennzeichnet**, daß die Anschlagkonsolen (4, 4a, 4b) am Tankwagenuntergestell (1) paarweise in einem vorgegebenem Rastermaß (Y, Z) auf Abstand angeordnet sind, derart, daß die Anschlagkonsolen (4, 4a, 4b) des Tankwagenuntergestells (1) durch die zugeordneten Tankanschlagkonsolen (3) des einzelnen großvolumigen Tanks (2) oder die Tankanschlagkonsolen (3a, 3b) der beiden kleinvolumigen Tanks (2a, 2b) von außen übergreifbar und einfaßbar sind, wobei nach einer Krafteinleitung an einem Ende (A) des Tankwagenuntergestells (1) lediglich die auf dem der Krafteinleitung gegenüberliegenden Ende des Tanks (2, 2a, 2b) angeordneten Tankanschlagkonsolen (3, 3a, 3b) jedes Tanks (2, 2a, 2b) beaufschlagt werden.

4. Tankwagen-Logistik-System nach einem oder mehreren der Ansprüche 1 - 3, **dadurch gekennzeichnet**, daß zum Tansport oder zur Lagerung eines kleinvolumigen Tanks (2a, 2b) ein entsprechend kurz bauendes Tankwagenuntergestell (1a) mit zwei im Abstand des Rastermaßes (Y) für die kleinvolumigen Tanks (2a, 2b) angeordneten untergestellseitigen Anschlagkonsolen (4a, 4b) vorgesehen ist, wobei daß Rastermaß (Y) dem Abstand in Längsrichtung des Tanks (2a, 2b) zwischen den jeweils am Ende des Tanks (2a, 2b) angeordneten Tankanschlagkonsolen (3a, 3b) entspricht und wobei die Tankanschlagkonsolen (3a, 3b) die untergestellseitigen Anschlagkonsolen (4a, 4b) von außen übergreifen und einfassen.

5. Tankwagen-Logistik-System nach einem oder mehreren der Ansprüche 1 - 4, **dadurch gekennzeichnet**, daß zwischen den untergestellseitigen Anschlagkonsolen (4, 4a, 4b) und den zugeordneten Tankanschlagkonsolen (3, 3a, 3b) ein Längsspiel vorgesehen ist.

6. Tankwagen-Logistik-System nach einem oder mehreren der Ansprüche 1 - 5, **dadurch gekennzeichnet**, daß jeder Tank (2, 2a, 2b) mindestens einen Tankstuhl (5) aufweist, über den der Tank (2, 2a, 2b) auf einem ebenen Boden abstell- und abstützbar ist.

7. Tankwagen-Logistik-System nach Anspruch 6 **dadurch gekennzeichnet**, daß jeder Tank (2, 2a 2b) zwei Tankstühle (5) aufweist, von denen jeweils einer an jedem Endbereich angeordnet ist.

8. Tankwagen-Logistik-System nach Anspruch 6 oder 7 **dadurch gekennzeichnet**, daß die Tankstühle (5) in der Aufstandsebene in Querrichtung der Tanks (2, 2a, 2b) die Tankanschlagkonsolen (3, 3a, 3b) überragen.

9. Tankwagen-Logistik-System nach einem oder mehreren Ansprüchen 1 - 8, **dadurch gekennzeichnet**, daß der Tankstuhl (5) und die Tankanschlagkonsole (3, 3a, 3b) baulich kombiniert ausgebildet ist.

10. Tankwagen-Logistik-System nach einem oder mehren Ansprüchen 1 - 9, **dadurch gekennzeichnet**, daß die Tanks (2, 2a, 2b) an ihren Enden mit Anhebekonsolen (6) versehen sind.

11. Tankwagen-Logistik-System nach einem oder mehren Ansprüchen 1 - 10, **dadurch gekennzeichnet**, daß am Tankwagenuntergestell (1) und am Tank (2, 2a,2 b) eine Zentriereinrichtung (7) angeordnet ist.

12. Tankwagen-Logistik-System nach Anspruch 11, **dadurch gekennzeichnet**, daß die Zentriereinrichtung (7) mindestens eine untergestellseitige und ein tankseitige Anlaufschräge aufweist.

13. Tankwagen-Logistik-System nach einem oder mehreren Ansprüchen 1 - 12, **dadurch gekennzeichnet**, daß die Tanks (2, 2a, 2b) am Scheitel mit einer Arbeitsbühne (9) versehen sind.

14. Tankwagen-Logistik-System nach Anspruch 13, **dadurch gekennzeichnet**, daß die Arbeitsbühnen (9) der kleinen Tanks (2a, 2b) höhengleich ausgebildet und an dem zur Quermitte weisenden Ende des Tanks (2a, 2b) nahezu bis zur Quermitte herangeführt sind.
